# EUROPEAN PATENT APPLICATION

(11) **EP 1 039 286 A1**
(43) Date of publication of application: **27.09.2000**
(21) Application number: 00102287.0
(22) Date of filing: 17.02.2000
(51) Int. Cl.: G01M 13/02, B60K 28/10, B60K 25/10

(54) **Driveline vibration monitor**

(30) Priority: 19.03.1999 US 272440
(71) Applicant: Meritor Heavy Vehicle Systems, LLC, Troy, MI 48084 (US)
(72) Inventor: Miller, Sean Christopher, Oak Park, MI 48237 (US); Kyrtsos, Christos, Southfield, MI 48076 (US); Tousignant, Alan, Clinton Township, MI 48038 (US)
(74) Representative: Sties, Jochen, Dipl.-Ing.

(57) **Abstract**

A method of monitoring a property of a driveline of a vehicle includes converting vibrations of the driveline to energy. A property value of the driveline is measured. A warning signal may be sent indicating that the driveline may be experiencing a problem based upon the measured values. The present invention eliminates the need of an outside source of power to implement at least some of the steps of the method by utilizing the vibration to create energy.

## Description

### BACKGROUND OF THE INVENTION

The invention relates to a method of monitoring and/or utilizing driveline vibration to indicate the physical condition of the driveline.

Vehicle driveline require routine maintenance and inspection to extend service life and prevent potential physical damage during use. The driveline of a particular vehicle model has specific properties when in motion. The properties of a driveline may include vibration levels, temperatures, etc. Vibration levels of a driveline provide information as to the physical condition of the driveline. For example, as the driveline approaches and experiences mechanical failure, vibration levels of the driveline will likely increase. Additionally, the temperature of a driveline is also indicative of the physical condition of a driveline. For example, when a part of a driveline endures severe physical treatment or is not properly lubricated, the temperature of the driveline typically increases.

Values of driveline properties, such as vibration levels and temperature of a driveline, during safe use may fall within an expected range indicative of no physical damage to the driveline. However, when a property value of the driveline falls outside an expected range, the driveline may have physical damage.

One way to diagnose the physical condition of the driveline of a vehicle is for the driver or mechanic to routinely check under the vehicle for the outer physical appearance of the driveline. An appearance that is out of the ordinary is indicative of potential physical damage to the driveline. This method of routinely checking the outer physical appearance of the driveline is somewhat time consuming and sometimes inaccurate. This current method requires the driver to intermittently stop the operation of the vehicle, exit the vehicle, and manually look under the vehicle to determine the condition of the driveline. A considerable amount of time is usually taken to make this determination.

Additionally, in many situations, this current method is inaccurate because it relies on the driver's judgment regarding the driveline condition which depends either on the outside physical appearance of the driveline or the age of the driveline. No consideration is made on the driveline parts outside the scope of vision of the driver. Moreover, in many circumstances, the driver or mechanic is not technically trained in determining the physical condition of the driveline. Further, typically no check is made, since the driver is left to his own initiative. Thus, the period between routine checks is too long.

Recently, it has been proposed to utilize sensors to indicate driveline conditions. The proposed sensors in general require a separate power source. This may sometimes be undesirably expensive. It would be desirable to provide a self-contained regenerating power source.

### SUMMARY OF THE INVENTION

In one main feature, this invention uses the vibration experienced by drivelines to power sensors or other diagnostic equipment. In a disclosed embodiment of the invention, a method of monitoring properties of a driveline are monitored to indicate the physical condition of the driveline. The present invention eliminates the requirement of an outside source of power to implement the method. The present invention allows the driver to monitor properties of a driveline while operating the vehicle, and provides a more efficient, accurate, and safe way to determine the physical condition of the driveline of a vehicle.

Vehicle drivelines experience a good deal of vibration. Typically, vehicle drivelines vibrate almost constantly during vehicle use. However, this vibration is typically at a very low level. The method of the present invention generally comprises converting vibrations from a driveline to energy, measuring a property value of the driveline, converting the property value to an encoded signal representing the property value, analyzing the encoded signal based on an expected value, and sending a warning signal when necessary.

A device, e.g., a piezo device, may be used to receive vibrations and convert the vibrations to energy. A sensor may use the energy to measure property values of the driveline and convert the measured values to encoded signals. Property values of the driveline may be any value indicative of the physical conditions of the driveline, e.g., vibration levels, temperature, etc. The vibration may also be used to power a transmitter to transmit the values to a remote receiver, such as a receiver and control in the vehicle. The control compares the encoded signal with expected values or ranges. When necessary, the control then may send warning signals to a display indicating that there may be a problem with the driveline.

These and other features of the present invention can be understood from the following specification and drawings.

### BRIEF DESCRIPTION OF THE DRAWING

Figure 1 is a schematic view of a system incorporating the present invention.

Figure 2 is a basic flow chart of an embodiment of the present invention.

Figure 3A is a flow chart of the method of an embodiment of the present invention.

Figure 3B is a schematic view of a system that may perform the methods of the embodiment in Figure 3A.

Figure 3C is a schematic view of another system that may perform the methods of the embodiment in Figure 3A.

Figure 4A is a side view of a sensor that may be used to implement the present invention.

Figure 4B shows another embodiment.

Figure 4C is a schematic view of a system incorporating the present invention that may use the sensor in Figures 4A or 4B.

Figure 4D is a flow chart of the method of another embodiment of the present invention.

Figure 4E is a diagram of transmitted waveforms and encoded signals used in the system shown in Figure 4C.

Figure 5A is a schematic view of another system incorporating the present invention.

Figure 5B is a view of an interface circuitry that may be used in the system of Figure 5A.

Figure 5C is a diagram of radio frequency signals that may be used in the system of Figure 5A.

Figure 6A is a schematic view of yet another system that may be used to incorporated the present invention.

Figure 6B is a schematic view of an oscillator and a sensor that may be used in the system in Figure 6A.

Figure 6C is a schematic view of another oscillator and sensor that may be used in the system in Figure 6A.

### DETAILED DESCRIPTION OF A PREFERRED EMBODIMENT

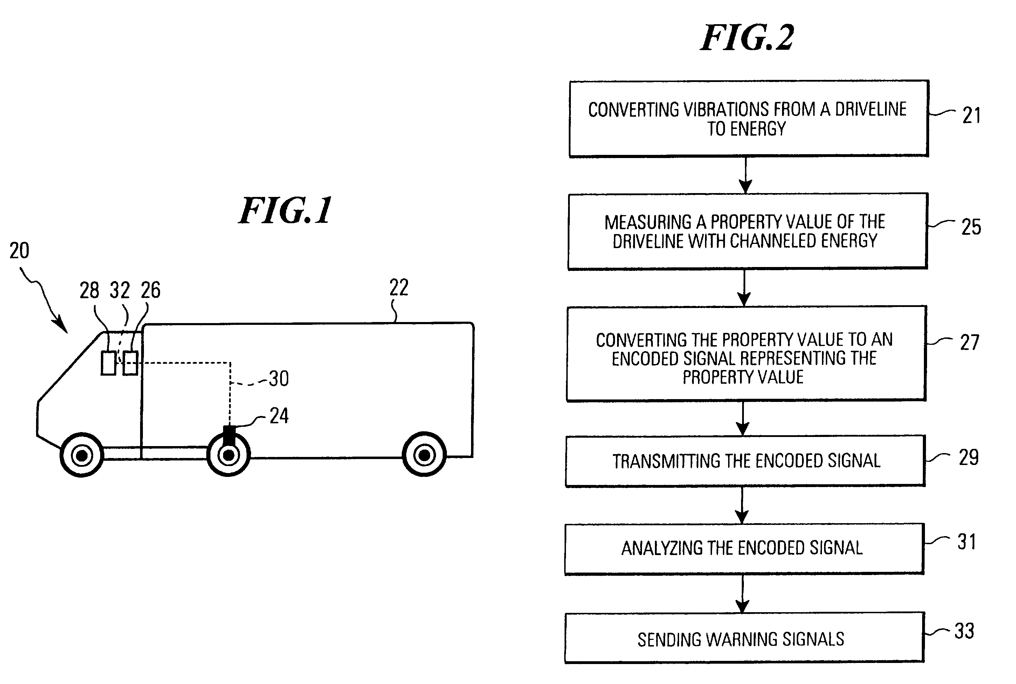

Figure 1 shows a system 20 incorporating the present invention. A method according to this invention involves monitoring a property of a driveline of a vehicle 22 to determine the physical condition of the driveline by using a sensor 24, a control 26, and a display 28.

As shown in Figure 2, a flow chart for this method could generally be described as converting driveline vibrations to energy at the driveline in step 21, measuring a property value of the driveline in step 25, converting the property value to encoded signals representative of the property value in step 27, transmitting the encoded signals in step 29, analyzing the encoded signals in step 31, and sending warning signals, when necessary, indicating that a problem may exist in step 33. The steps 25 and/or 29 maybe powered by the energy of step 21.

The sensor 24 is shown schematically in Figure 1 associated with the driveline of the vehicle 22. In a preferred embodiment, the sensor 24 of Figure 1 may be used to perform steps 21, 25, 27 and 29 of Figure 2. The sensor 24, receives driveline vibrations and converts the driveline vibrations to energy in step 21. The sensor 24 may use the energy to measure a property value of the driveline in step 25, to convert the property value to encoded signals representative of the property value in step 27, and to send or transmit the encoded signals in step 29. As mentioned above, the property values may be any value of the driveline that could be used to indicate the physical condition of the driveline, e.g., temperature, sound, vibration levels, etc. The sensor 24 may be any suitable device or may represent any combination of suitable devices known in the art which can perform the steps mentioned above.

Furthermore, in one broad aspect, step 21 could be used without monitoring a condition. In such a system, a component for some other purpose could be powered by the vibrations.

The control 26 of Figure 1 may be used to perform steps 31 and 33 in Figure 2. The control 26 receives the encoded signals and analyzes the signals in step 31. If it is shown that the property value of the driveline differs from the limitations of expected values or ranges, then a warning signal 32 may be sent from the control 26 to the display 28 indicating that the vehicle 22 may have a problem. The control 26 may be any suitable device known in the art which can receive encoded signals and analyze the signals as mentioned above. For example, a central processing unit such as a computer that is programmed to perform such tasks may be used. Furthermore, the display 28 may be any suitable device known in the art which can receive warning signals and indicate a problem. For example, a computer monitor, an LED, or a sound emitting device may be used.

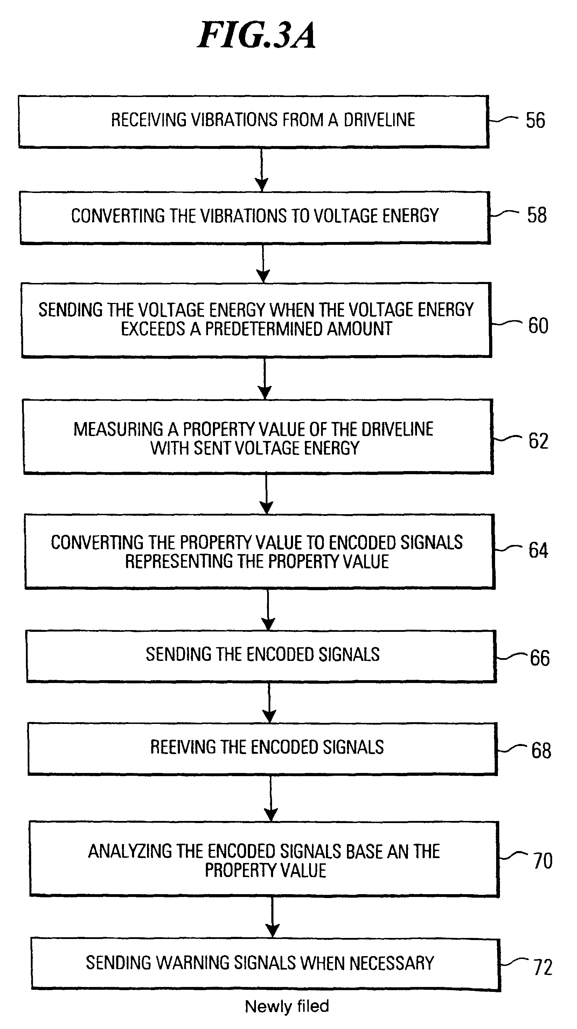

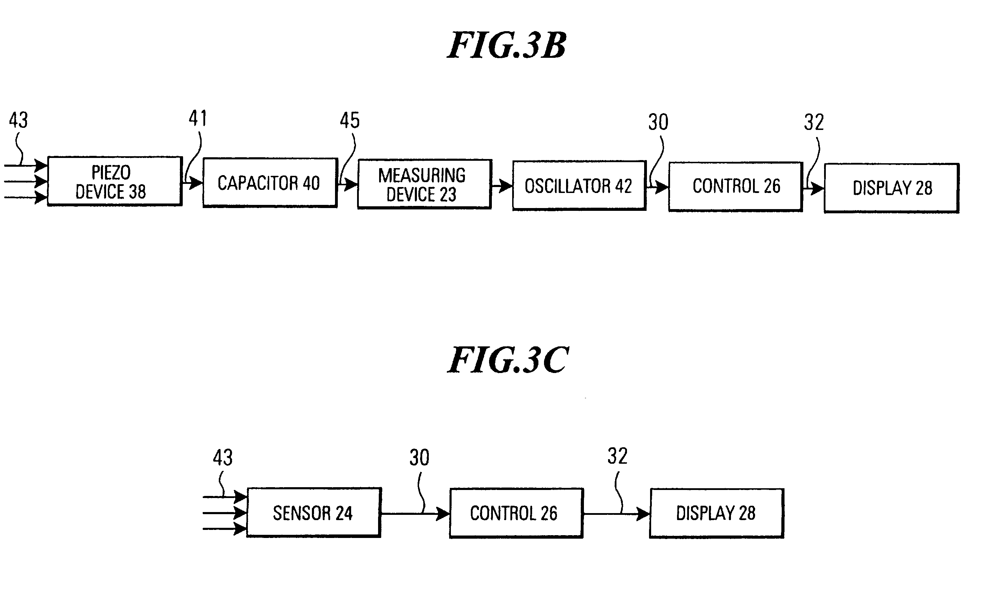

One specific method is shown in Figure 3A. Steps 56 and 58 include receiving vibrations of a driveline and converting the vibrations to voltage energy at the driveline. As noted above and shown in Figure 3B, the sensor 24 may be represented by a combination of devices to perform the steps of the present invention. In one example, the sensor 24 includes a piezo device 38, a capacitor 40, a sensing or measuring device 23, and an oscillator 42.

Referring now to Figure 3B, a piezo device 38, may be used to receive vibrations 43 of a driveline and convert the vibrations 43 to voltage energy 41. As it is known in the art, a piezo device can receive vibrations which cause the piezo device to produce voltage energy. The energy 41 produced by the piezo device 38 flows to a capacitor 40 in which the energy 41 is stored. Due to the energy 41 converted from the vibrations 43, no external source of power is required. Preferably, the capacitor 40 has a predetermined impedance which is preferably matched to the piezo/circuit clement. The capacitor 40 may be any suitable capacitor that can have a predetermined impedance.

As described in step 60 of Figure 3A and shown in Figure 3B, when the energy 41 exceeds the predetermined energy value, the capacitor 40 discharges energy 45 to the measuring device 23. With the energy 45, the sensing or measuring device 23 measures property values of the driveline and sends the values to an oscillator 42. The measuring device may be any type of suitable device that can measure property values of a driveline, e.g. a thermistor. The oscillator 42 then converts values to signals 30 encoded with the measured values of the driveline and transmits the encoded signals 30 to the control 26 in step 66. As known, this transmission may use radio frequency signals to transmit the information to the control 26. The oscillator 42 may be any suitable type of device, such as programmable hardware, that can convert sensed property values to signals and transmit the signals.

As can be seen in Figure 3C, it is to be noted that the inventive scope includes situations where a separate capacitor or oscillator may not be needed or where one device performs the functions of all the devices.

In the examples shown in Figures 3A, 3B, and 3C the control 26 receives the encoded signals 30 in step 68, analyzes and compares the property values with expected values in step 70, and sends warning signals to display 28 when necessary.

The expected values that are compared with the property values may be determined during an initial stage of operating the vehicle. When the vehicle departs for its destination, initial property values may be measured to set normal operating values or expected values. Property values taken after these initial property values are taken may be compared and analyzed accordingly based on the initial property values. However, expected values may be determined in any other suitable way and may be programmed into the control 26, if desired.

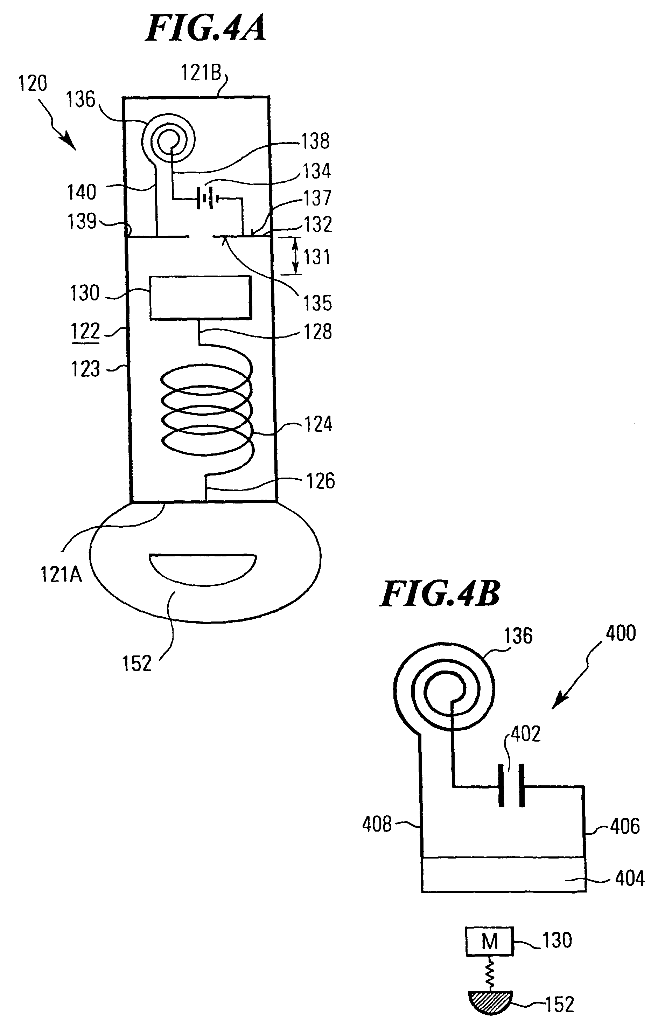

A sensor 120 is shown in Figure 4A which may be implemented in the present invention. The sensor 120 receives vibrations, converts the vibrations to energy, and uses the energy to (1) measure vibration levels of the driveline, (2) convert the vibration levels to encoded signals representative of the vibration levels, and (3) transmit the signals. Thus, in this embodiment, the vibration is not only used to power the system, but is also the monitored driveline condition. Preferably, the sensor 120 has a housing 122 which houses elements that further comprise the sensor 120. Preferably, the housing 122, being a hollow elongated member, comprises a bottom end 121A attached to the driveline 152 (shown schematically) of a vehicle, side walls 123 connecting upwardly, and a top end 121B connecting to side walls 123. The housing 122 may be made of rigid material such as high density plastic or the like. The sensor 120 further includes a spring 124 attached to the bottom end 121A, a weighted member or mass 130 connecting to the spring 124, a contact 132 spaced from the weighted member or mass 130, a battery 134 connecting to the contact 132, and a coil 136 connecting to the battery.

The spring 124, having a predetermined resistance to vibrations, has a first end 126 and an opposing second end 128. The first end 126 attaches to the bottom end 121A by any suitable means. The mass 130 connects to the second end 128. The spring 124 may be made of any suitable material such as metal, high density plastic or the like. The mass 130 attaches to the second end 128 by any suitable means such as by welding, hook and loop, etc. The mass 130 is a predetermined weight which rests preferably on the second end 128 of the spring 124 and moves with respect to the movement of the spring 124. The mass 130 may be any suitable shape such as cubical, cylindrical, etc. Preferably, the mass 130 is made of any type of suitable electrically conductive material such as metal.

The contact 132, having a bottom surface 135, a top surface 137, and an edge 139, is suspended within the boundaries of the housing 122 and is spaced above the mass 130 to define a distance 131. The edge 139 attaches to the side walls 123 of the housing 122 such that the contact 132 may be disposed within the housing 122. The contact 132 is preferably flat and made of electrically conductive material such as metal.

Battery 134 connects to the top surface 137 of the contact 132. A coil antenna 136 has a positive end 138 and a negative end 140. End 138 connects to the battery 134 and the contacting end 140 connects back to the contact 132. The antenna 136 may have a predetermined resistance.

Preferably but not necessarily, the sensor 120 is positioned at an incline or vertically on the driveline of a vehicle. Vibrations from the driveline cause the spring 124 to vibrate. Due to the vibration of the spring 124, the mass 130 also vibrates and vertically displaces with respect to the vibrations from the driveline and the resistance of the spring 124. When the mass 130 displaces the distance 131, due to the impact of the vibrations, the mass 130 engages with the bottom surface 135 of the contact 132. Voltage from the battery 134 may be sent or transmitted.

Figure 4B shows a sensor system 400 which is also utilized with the mass 130 affixed to the vehicle 153. When mass 130 contacts the surface 404, a piezo-electric device generates a signal. The piezo-electric device 404 is connected through a line 406 to a capacitor 402. The other end 408 of the piezo device is connected through to the antenna 136. When a sufficient amount of energy has been stored in the capacitor 404, the signal will then be discharged and sent through the antenna 136.

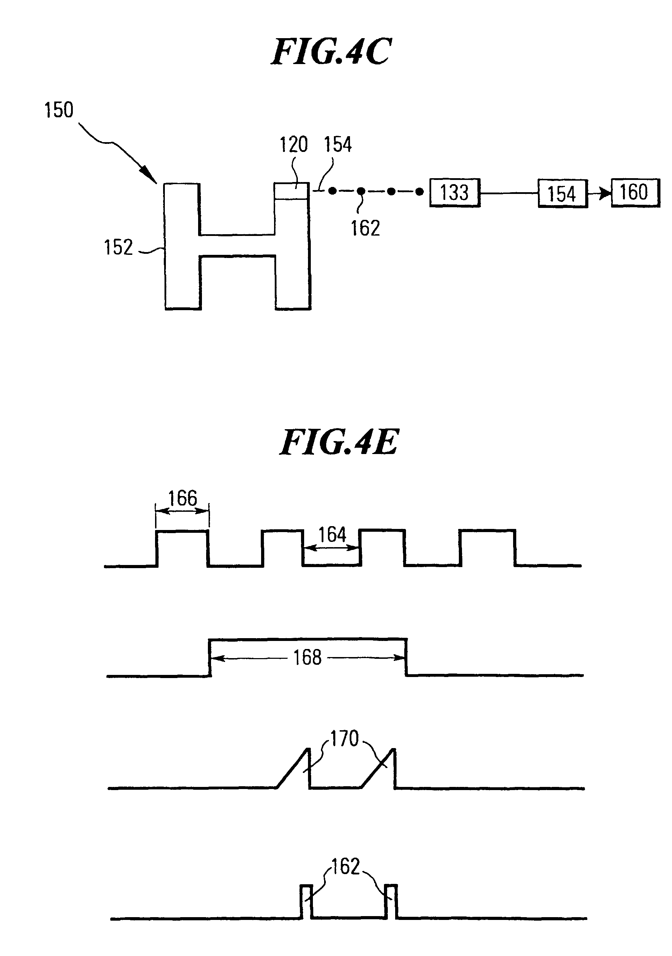

Figure 4C shows a system 150 which uses sensor 120 of Figure 4A or sensor 400 from Figure 4B. The system 150 is shown schematically associated with a driveline 152. In this embodiment, when voltage is induced for the time duration by sensor 120. as mentioned above, a control 154 ultimately receives encoded signals 162 from sensor 120 as reflected signals of continuously sent pulses or waveforms 158. Waveforms 158 are continuously sent by the control 154 and received by the sensor 120. The waveforms 158 may be sent by any suitable means from the control 154 such as by radio frequency signals with an attached antenna 133. As shown in Figure 4C, a flow chart for this method could generally be described as receiving vibrations from a driveline, emitting voltage energy for a duration representative of the vibration, converting the emitted voltage energy to encoded signals representative of the emitted voltage energy, sending the encoded signals, receiving the encoded signals, and analyzing the encoded signals. Again, the sensor 120 is self-powered by the vibration energy.

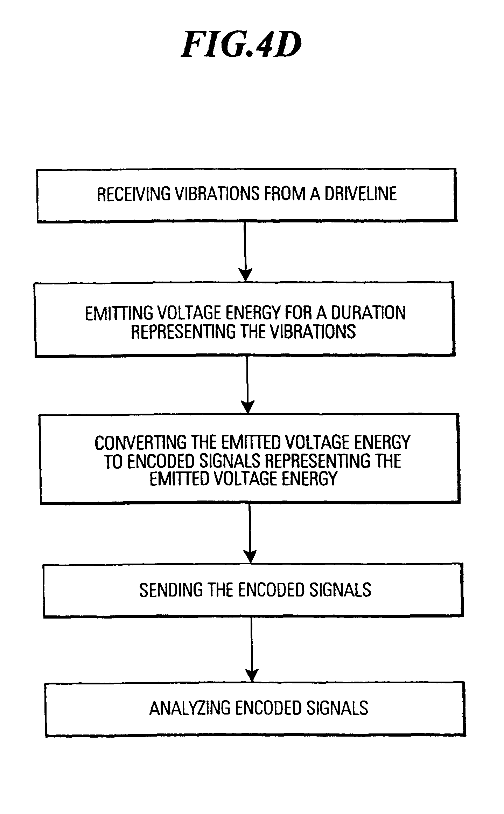

As it can be seen in Figures 4A, 4B, and 4D, pulses or waveforms 158 may be sent by the control 154 at constant rate 164 with known width 166. The waveforms 158 are received by the coil 136. When energy stored in the capacitor 134 exceeds a predetermined impedance, voltage energy 170 is induced by the capacitor 134 for a time duration 168 which is directly related to the duration of engagement between the mass 130 and the contact 132. As shown in Figure 4D. the voltage energy 170 is transmitted to the control 154 as encoded signals 162 by being reflected off waveforms 158 sent at constant rate 164 with known width 166. Due to the continuity of the waveforms 158, the antenna 133 of the control 154 receives the encoded signals 162 and may analyze the encoded signals.

In another embodiment, a control may have a receiver which receives radio frequency signals from an oscillator. However, it is to be noted that the encoded signals may be transmitted and received by any suitable means.

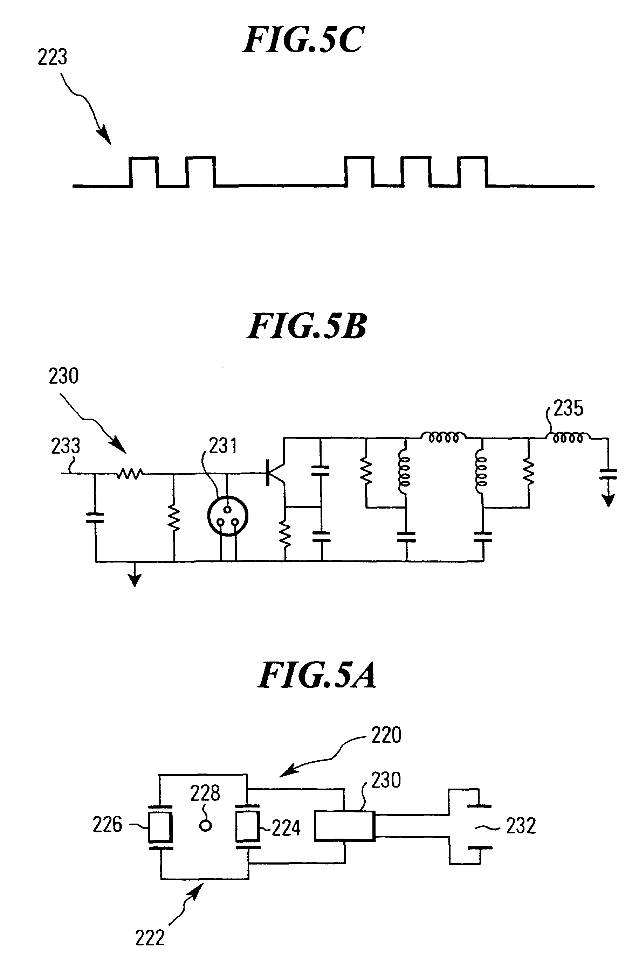

As it can be seen in Figure 5A, system 220 which incorporates the present invention may be used. As mentioned above, a piezo device 222 may be used to receive vibrations and convert the vibrations to energy, independent of any power source. Piezo device 222 is actually two opposing devices 224 and 226, and a free ball 228. When either is hit by 228, energy is produced. A supercharged capacitor 232 which may have a predetermined energy storage valve, connects to both ends 224, 226. When the predetermined amount of energy is stored, then the capacitor discharges and allows the energy to be used to transmit signals.

An interface circuitry 230, also shown in Figure 5B, may connect to the supercharged capacitor 232 by any suitable means. Interface circuitry 230 may be used to transmit the radio frequency signals 223. Interface circuitry 230 may include a saw resonator 231 and receive an input signal at 233 to transmit an output through antenna 235. Such a transmitter is used in known remote keyless entry transmitters. However, it is to be noted that any other suitable circuitry may be used to implement the steps mentioned above.

The supercharged capacitor 232 stores the energy until a predetermined value is exceeded or reached. Then, as energy from the supercharged capacitor 232 flows to the interface circuitry 230, shown in Figure 5B, in which the voltage energy is converted to encoded signals and transmitted to a control. For example, the transmitted signals may be a burst of radio frequency (RF) signals having a particular coded sequence which is mechanically or electrically selectable.

Figure 5C shows a diagram of RF signals 223 that may be used to implement the present invention. The RF signals 223 are sequentially coded, and representing a specific magnitude of energy from which a property value may be decoded. Alternatively, the oscillator may send sequentially spaced values, FM signals directly related to vibration levels from the driveline, or any other signals encoded with vibration magnitudes. The oscillator then transmits the RF signals 2?3 to a control.

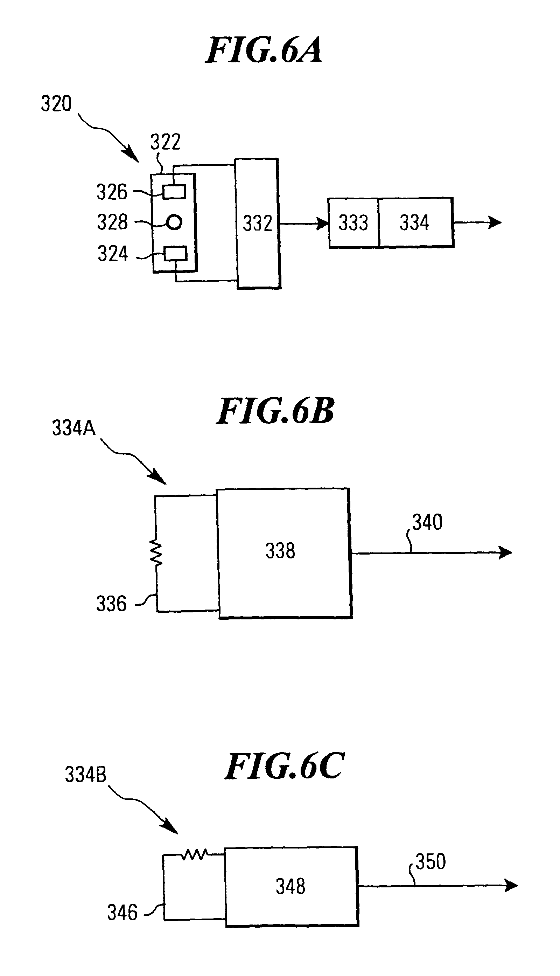

As it can be seen in Figure 6A, system 320 which may incorporate the present invention includes a piezo device 322, a capacitor 332, and an oscillator 334. The piezo device 32? is used to receive vibrations and convert the vibrations to voltage energy, independent of any power source. The piezo device 3?2 has two opposing ends, a positive end 324 and a negative end 326, and a free ball 328. A supercharged capacitor 332 connects to both ends 324, 326. The supercharged capacitor 332 stores the energy until a predetermined value is exceeded or reached. Then, as shown in Figure 6A, voltage energy from the supercharged capacitor 332 powers a sensor 333 which measures property values of a driveline. An oscillator 334 converts the values to encoded signals and transmits the signals to any suitable control. The encoding and transmitting steps implemented by the oscillator may be performed in any suitable manner such as those described above.

As shown in Figure 6B, the sensor 333 and oscillator 334 of Figure 6A may be represented by a sensor-oscillator 334A which includes a saw resonator 338 and a thermistor 336. The saw resonator 338 may be connected to the thermistor 336. The thermistor 336 receives power by the energy from the supercharged capacitor 332 and measures the temperature of the driveline. The temperature values are received by the saw resonator 338 and are converted to encoded radio frequency signals. The saw resonator 338 then transmits the signals to a control. This is all powered by the vibration converted energy. The thermistor 336 may be, but is not limited to, a PTC thermistor, NTC thermistor, RTD, or any other suitable device that changes resistance with temperature or that has a charge capable of affecting the signal's frequency or amplitude. The saw resonator 336 may be any type of resonator that can transmit the encoded signals to any suitable control.

As shown in Figure 6C, the sensor 333 and oscillator 334 of Figure 6A may be represented by a sensor-oscillator 334B which includes a limit switch 346 and a saw resonator 348. The limit switch 346 is powered by a predetermined amount of energy from the supercharged capacitor 332 and converts the voltage energy into encoded RF signals. The saw resonator 348 then transmits the signals to any suitable control by, for example, radio frequency signals 350. The limit switch 346 may be any suitable device that limits the signals received by the saw resonator 348. The saw resonator 336 may be any type of resonator that can transmit the encoded signals to any suitable control.

Preferred embodiments have been disclosed. However, a worker in this art would recognize that modifications would come within the scope of this invention. Thus, the following claims should be studied to determine the scope and content of this invention.

## Claims

1. A method of monitoring a driveline of a vehicle comprising:
a. converting vibration of the driveline to energy;
b. measuring a property value of the driveline;
c. converting said property value to a signal representing said property value;
d. analyzing said signal based on an expected value;
e. sending a warning signal indicating that the driveline may be experiencing a problem based upon said analyzing in step (d); and
wherein at least one of steps (b) and (c) are powered by the energy of step (a).

2. A method as in claim 1, wherein said measuring of step (b) occurs when the energy exceeds a predetermined magnitude.

3. A method as in claim 1, wherein said problem relates to a potential damage to the driveline.

4. A method as in claim 1, wherein said property value includes a temperature value.

5. A method as in claim 1, wherein said property value includes a vibration level value.

6. A method as in claim 1, wherein said vibration includes a plurality of vibrations of the driveline.

7. A method as in claim 1, wherein both steps (b) and (c) are powered by the energy of step (a).

8. A method of monitoring a driveline of a vehicle comprising:
a. receiving vibration on the driveline;
b. emitting voltage energy for a duration representing said vibration when said vibration exceeds a predetermined amplitude;
c. generating a signal, said signal representing said voltage energy;
d. transmitting said signal to a predetermined location; and
e. analyzing said signal based on an expected value at said predetermined location.

9. A method as set forth in Claim 8, wherein said signal is generated by a mass completing an electrical circuit, and a battery then sending said signal.

10. A method as set forth in Claim 8, wherein a mass contacts a piezo-electric device to generate a signal, said signal then being sent to a capacitor.

11. A vehicle diagnostic system comprising:
a. a sensor for receiving driveline vibrations and converting the vibrations to energy, said sensor also sensing a condition of said driveline; and
b. a control in communication with said sensor for comparing said sensed condition with expected conditions.

12. A vehicle diagnostic system as recited in claim 11, wherein said sensed condition is driveline vibration.

13. A vehicle diagnostic system as recited in claim 9, wherein said sensed condition is temperature.

14. A vehicle diagnostic system as recited in claim 11, wherein said sensor includes:
a piezo device for receiving driveline vibrations and converting the vibrations to energy;
a capacitor for storing and sending the energy, said capacitor connected to said piezo device, said capacitor having a predetermined impedance;
a sensing device for receiving the energy from said capacitor and sensing said condition of the driveline and sending values of said sensed condition, said sensing device connected to said capacitor; and
an oscillator for receiving said values and converting said values to signals and transmitting said signals to said control, said oscillator connecting to said sensing device.

15. A vehicle diagnostic system as recited in claim 14, wherein said sensing device includes a thermistor.

16. A vehicle diagnostic system as recited in claim 14, wherein said sensing device includes a limit switch.

17. A vehicle diagnostic system as recited in claim 14, wherein said oscillator includes a saw resonator.

18. A vehicle diagnostic system as recited in claim 9, wherein said sensor includes:
a housing for housing members of said sensor, said housing having enclosing side walls, said side walls having a top end and a bottom end, said bottom end attached to the driveline;
a spring for receiving driveline vibrations, said spring being disposed through said housing, said spring having a first end and an opposing second end, said first end attached to the driveline of the vehicle;
a weighted member having a connecting surface and an opposing contact surface, said connecting surface connected to said second end of said spring;
a contact having a bottom surface, a top surface, and an edge, said edge connected within said side walls of said housing, said contact spaced from said weighted member by a distance, said bottom surface being engagable with said contact surface of said weighted member;
a capacitor for converting vibrations to energy, said capacitor connecting to said top surface of said contact; and
an output coil connecting to said capacitor

19. A vehicle diagnostic system as recited in claim 18, wherein said spring has a predetermined vibration resistance.

20. A vehicle diagnostic system as recited in claim 9, wherein said sensor includes
a piezo device for receiving driveline vibrations and converting the vibrations to energy;
a capacitor for storing and sending the energy, said capacitor connected to said piezo device, said capacitor having a predetermined impedance; and
an interface circuitry for receiving the energy and converting the energy to signals and transmitting said signals to said control, said interface circuitry connected to said capacitor.

21. A vehicle diagnostic system as recited in claim 20, wherein said interface circuitry includes:
a saw resonator connected to said capacitor; and
an output antenna connected to said saw resonator.
